# EUROPÄISCHE PATENTSCHRIFT

(11) **EP 4 419 827 B1**
(45) Veröffentlichungstag und Bekanntmachung des Hinweises auf die Patenterteilung: **29.04.2026**
(21) Anmeldenummer: 22802602.7
(22) Anmeldetag: 17.10.2022
(51) Int. Cl.: F16L 55/165, B32B 17/02, E03F 3/06

(54) **AUSKLEIDUNGSSCHLAUCH ZUR SANIERUNG VON DEFEKTEN ROHRLEITUNGEN UND KANÄLEN UND FASERBAND ZUR HERSTELLUNG EINES SOLCHES**
LINING TUBE FOR REFURBISHING DEFECTIVE PIPELINES AND CHANNELS AND FIBER TAPE FOR PRODUCING THE SAME
TUBE DE REVÊTEMENT INTÉRIEUR POUR LA REMISE EN ÉTAT DE TUYAUX ET CONDUITES DÉFECTUEUX ET RUBAN EN FIBRE POUR LA FABRICATION D'UN TEL TUBE

(30) Priorität: 18.10.2021 DE 102021126951
(43) Veröffentlichungstag der Anmeldung: 28.08.2024
(73) Patentinhaber: Brandenburger Liner GmbH & Co. KG, 76829 Landau (DE)
(72) Erfinder: BUSS, Johannes, 77749 Hohberg (DE)
(74) Vertreter: Kesselhut, Wolf
(86) Internationale Anmeldenummer: PCT/EP2022/078831
(87) Internationale Veröffentlichungsnummer: WO 2023/066863

(56) Entgegenhaltungen:
- EP-A1- 2 827 040
- DE-A1- 102010 018 479
- US-A1- 2015 246 501
- US-B2- 6 615 875
- US-B2- 9 435 468

## Beschreibung

Die Erfindung betrifft einen Auskleidungsschlauch zur Sanierung von defekten Rohrleitungen und Kanälen und ein Faserband zur Herstellung eines solchen.

Auf dem Gebiet der grabenlosen Sanierung von defekten Rohrleitungen, wie z.B. defekten Abwasserkanälen, werden zunehmend Auskleidungsschläuche eingesetzt, die eine oder mehrere Lagen aus einem mit einem flüssigem Reaktionsharz getränkten Glasfaserlaminat aufweisen, welches in Form von überlappend gewickelten oder gelegten Faserbändern um einen Innenfolienschlauch herum angeordnet ist. Auf der Außenseite ist das Laminat von einem Außenfolienschlauch umgeben, der einen Austritt von schädlichen Substanzen, insbesondere von Styrol, aus dem Reaktionsharz in das Erdreich verhindert. Die Auskleidungsschläuche, die auch als Inliner bezeichnet werden, werden in einen zu sanierenden Kanal eingezogen, nach dem Einziehen an ihren Enden mit Hilfe von Packern verschlossen und mittels Druckluft expandiert und durch Licht einer UV-Strahlungsquelle, oder alternativ durch Einleiten von Heißdampf, ausgehärtet.

Ein zuvor genannter Auskleidungsschlauch sowie ein Verfahren zur Herstellung eines solchen sind beispielsweise aus der WO-A 95/04646 bekannt.

Um beim Expandieren der Auskleidungsschläuche eine bestmögliche Anlage derselben an die Kanalinnenwände zu erhalten, welche die Grundvoraussetzung für eine hohe maximale mechanische Belastbarkeit darstellt, werden diese üblicherweise mit einem Außendurchmesser gefertigt, der 5 bis 10 % kleiner als der Innendurchmesser DN des zu sanierenden Kanalrohrs ist. Dieses geringfügige Untermaß führt aufgrund der zusätzlichen Dehnung des Auskleidungsschlauchs beim Expandieren zu einer verbesserten Oberflächengüte des ausgehärteten Laminats und erlaubt es, geringfügige Durchmesseränderungen eines Kanalrohrs auszugleichen. Eine Dehnbarkeit von mehr als 10 % ist bei den bekannten Auskleidungsschläuchen des Standes der Technik, wie beispielsweise denen der WO-A 95/04646, hingegen nicht möglich, da sich hierdurch die Gefahr ergibt, dass die empfindliche transparente Innenfolie überdehnt und beschädigt wird, sodass die beim Expandieren eingeleitete Druckluft durch die beschädigte Innenfolie hindurch in das Laminat austritt und das flüssige Reaktionsharz an der entsprechenden Stelle ausbläst. Dies führt nach dem Aushärten des Reaktionsharzes in der Regel zu einer mechanischen Schwachstelle und Undichtigkeit, die, wenn überhaupt, nur mit großem Aufwand ermittelt und beseitigt werden kann.

Auf der anderen Seite ist es jedoch in der Praxis ebenfalls nicht möglich, die zuvor beschriebenen Auskleidungsschläuche mit einem Durchmesser zu fertigen, der größer als der Innendurchmesser des zu sanierenden Kanalrohres ist, da das Laminat und der Außenfolienschlauch in diesem Falle Falten schlagen, die im sanierten Kanal unerwünscht sind und die bei der Aushärtung mittels UV-Licht zu einer Schattenbildung führen, welche bei größeren Wanddicken eine vollständige Durchhärtung des Reaktionsharzes verhindert.

Aus den zuvor genannten Gründen werden bei der Sanierung von Rohrleitungen mit einem Durchmesser DN zwischen 150 mm und 1000 mm mehr als 40 verschiedene Grund-Typen von Auskleidungsschläuchen mit einem jeweiligen Nenndurchmesser DN und einem jeweils speziell gefertigten Innenfolienschlauch benötigt, um für jeden Kanaldurchmesser einen optimal angepassten Auskleidungsschlauch bereitzustellen, der nach dem Einziehen, Expandieren und Aushärten eine maximale mechanische Festigkeit und Dichtheit garantiert. Es versteht sich, dass das Vorhalten einer entsprechenden Anzahl von in der Regel nahtlosen Innenfolienschläuchen, sowie die auf diesem aufbauende individuelle Fertigung des Laminats mit einem entsprechenden Durchmesser einen großen logistischen Aufwand darstellt, der die Produktion der Auskleidungsschläuche teuer macht.

Eine weitere Unzulänglichkeit der bekannten Auskleidungsschläuche ist darin zu sehen, dass Kanalrohre, bei denen sich der Innendurchmesser in einer sogenannten Haltung beispielsweise von DN 300 auf DN 400 sprunghaft ändert, mit den zuvor beschriebenen bekannten Auskleidungsschläuchen nur mit großen Unsicherheiten, bzw. mit großem Aufwand durch Einziehen und Verbinden zweier separater Auskleidungsschläuche mit einem entsprechenden Durchmesser auskleiden lassen.

Aus der nicht vorveröffentlichten DE 10 2020 134 200 A1 der Anmelderin ist ein Auskleidungsschlauch bekannt, der einen Innenfolienschlauch sowie eine um diesen herum angeordnete, radial aufweitbare Lage aus Fasermaterial mit einer hohen Dehnung aufweist, welches mit einem härtbaren Reaktionsharz getränkt ist. Um den Auskleidungsschlauch auf einen gegenüber herkömmlichen Auskleidungsschläuchen vergrößerten Durchmesser aufzuweiten, weist der Innenfolienschlauch einen sich in Längsrichtung desselben erstreckenden Verbindungsabschnitt auf, welcher zwei parallel zueinander verlaufende Umfangsabschnitte des Innenfolienschlauchs zu einem umfänglich geschlossenen Innenfolienschlauch mit einem definierten Nenndurchmesser verbindet. Der Verbindungsabschnitt besitzt eine sich entlang des Innenfolienschlauchs erstreckende Sollbruchstelle, die durch Einbringen eines Druckmediums in den Innenfolienschlauch in Umfangsrichtung aufgetrennt werden kann, um den Innenfolienschlauch und die darauf angeordnete Lage aus Fasermaterial radial um bis zu 30 % oder gar mehr über den Nenndurchmesser hinaus aufzuweiten. Die eingesetzten Faserbänder, die zur Erzeugung des Auskleidungsschlauchs an ihren Rändern überlappend schraubenförmig gewickelt sind, besitzen gegenüber Faserbändern, die bei herkömmlichen Auskleidungsschläuchen eingesetzt werden, eine deutlich höhere Längsdehnungsfähigkeit. Diese erhöhte Längsdehnungsfähigkeit, die nachfolgend auch als Längsdehnung bezeichnet wird, und die in Längsrichtung der Faserbänder betrachtet wenigstens 10 %, bevorzugt jedoch mehr als 30% oder gar 50% bezogen auf die Länge des ungedehnten Faserbandes betragen kann, ermöglicht es, dass die Glasfaserbänder der gewickelten Faserlage, und dadurch der Auskleidungsschlauch selbst sich in radialer Richtung, bzw. in Umfangsrichtung stärker ausdehnen können.

Wie von der Anmelderin erkannt wurde, ergibt sich insbesondere bei Großlinern mit Nenndurchmessern DN von mehr als 160 cm, in denen das zuvor beschriebene hochelastische Glasfasermaterial eingesetzt wird, das Problem, dass die Wandstärke der Liner aufgrund unterschiedlicher Dehnungen lokal stark unterschiedlich sein kann. Generell kann gesagt werden, dass in den Bereichen mit einer hohen Dehnung in Umfangsrichtung dünne, und in den Bereichen mit einer geringen Dehnung in Umfangsrichtung dicke Wandstärken im ausgehärteten Auskleidungsschlauch/Liner vorzufinden sind. Im Extremfall kann es dadurch mitunter sogar lokal zu einem Aufreißen des Glasgewebes kommen, während andere Bereiche noch nicht bzw. wenig gedehnt sind. Die unterschiedlichen Dehnungen des Glasfasermaterials in Umfangsrichtung sind dabei in erster Linie auf die unterschiedlichen Reibungskräfte beim Dehnen/Verschieben der überlappend gelegten, bzw. schraubenförmig gewickelten harzgetränkten Faserbänder zurückzuführen, die in beispielsweise fünf oder mehr Lagen übereinander angeordnet werden, um die notwendigen Wandstärken zu erhalten. Wie von der Anmelderin beobachtet werden konnte, sind beispielsweise die Wandstärken im Bereich der Sohle der ausgekleideten Auskleidungsschläuche in der Regel besonders groß, was darauf zurückzuführen ist, dass das Gewicht der im Querschnitt betrachtet oberhalb der Sohle angeordneten Faserbänder zusätzlich auf die im Bereich der Sohle befindlichen Faserbänder wirkt, und hierdurch die zwischen aufeinander liegenden Lagen wirkenden Reibungskräfte beim Verschieben desselben während des Aufstellens des Auskleidungsschlauchs erhöht.

Da zur Gewährleistung der geforderten Tragkraft und Festigkeit der Liner statisch bedingt Mindestwandstärken festgelegt werden, welche nicht unterschritten werden dürfen, haben Schwankungen der Wandstärke zur Folge, dass in den Bereichen mit einer Wandstärke die über der Mindestwandstärke liegt, letztlich überschüssiges, d.h. verschwendetes Fasermaterial vorliegt. Dies führt zu einem entsprechend erhöhten Materialeinsatz des vergleichsweise teuren Faserwerkstoffs, und damit zu zusätzlichen Herstellungskosten, ohne dass hierdurch ein Gewinn an Festigkeit des Auskleidungsschlauchs insgesamt erhalten wird. Diese Festigkeit wird hingegen durch die schwächsten Stellen des Auskleidungsschlauchs, d. h. die ausgedünnten Bereiche mit verminderter Wandstärke bestimmt.

Aus der US 6 615 875B2 ist ein Auskleidungsschlauch zur Sanierung eines defekten Kanalrohres bekannt, welcher einen Innenfolienschlauch sowie eine um diesen herum angeordnete, radial aufweitbare Lage aus wenigstens einem überlappend schraubenförmig gewickelten Faserband umfasst, das durch eine darauf wirkende Zugspannung in einem Dehnungsbereich plastisch dehnbar ist. Das Faserband enthält ein Basismaterial mit in Längsrichtung verlaufenden durchgehenden Glasfaserroving und Dehnungsbegrenzungsmittel in Form von parallel zueinander quer zur Längsrichtung des Auskleidungsschlauchs angeordneten Kurzfasern, die mit Hilfe eines zick-zack förmig angeordneten elastisch dehnbaren Garns mit dem Basismaterial vernäht sind, so dass sich das Faserband in Querrichtung aufdehnen lässt. Aufgrund der parallelen Ausrichtung der Kurzfasern ist die Fertigung des Faserbandes vergleichsweise aufwendig.

Demgemäß ist es eine Aufgabe der vorliegenden Erfindung, ein Faserband zur Herstellung eines Auskleidungsschlauchs zur Sanierung von defekten Rohrleitungen und Kanälen zu schaffen, welches alternative Dehnungsbegrenzungsmittel aufweist.

Diese Aufgabe wird erfindungsgemäß durch ein Faserband mit den Merkmalen von Anspruch 1 gelöst.

Eine weitere Aufgabe der Erfindung ist es, einen Auskleidungsschlauch zur Sanierung von defekten Rohrleitungen und Kanälen zu schaffen, welcher nach dem Expandieren und Aushärten in einem zu sanierenden Kanal oder einer Rohrleitung eine möglichst gleichmäßige Wandstärke besitzt.

Diese Aufgabe wird erfindungsgemäß durch einen Auskleidungsschlauch mit den Merkmalen von Anspruch 2 gelöst.

Weitere Merkmale der Erfindung sind in den Unteransprüchen beschrieben.

Nach dem der Erfindung zugrunde liegenden Gedanken umfasst ein Auskleidungsschlauch einen Innenfolienschlauch und eine darauf angeordnete Lage aus wenigstens einem überlappend schraubenförmig gewickelten Faserband, welches in Längsrichtung durch eine darauf wirkende Zugspannung in einem Dehnungsbereich plastisch dehnbar ist. Das Faserband zeichnet sich dadurch aus, dass dieses Dehnungsbegrenzungsmittel enthält, welche eine weitere plastische Dehnung des Faserbandes in Längsrichtung beim Überschreiten eines durch die Dehnungsbegrenzungsmittel bestimmten Dehnungs-Grenzwertes aktiv begrenzen.

Hierdurch wird erreicht, dass sich das Faserband bei einer weiteren Erhöhung der Zugspannung in Längsrichtung nicht weiter plastisch verformt, sondern seine Länge auch dann beibehält, wenn die Zugspannung weiter erhöht wird. Dadurch kann die auf das Faserband in Längsrichtung wirkende Zugspannung erheblich, beispielsweise auf das Doppelte, gesteigert werden kann, ohne dass sich der betreffende Abschnitt des Faserbandes plastisch weiter dehnt und dadurch einschnürt.

Diese erfindungsgemäße Eigenschaft des Faserbandes führt bei einem daraus durch schraubenförmiges Wickeln hergestellten Auskleidungsschlauch dazu, dass der Innendruck, der auch als Kalibrationsdruck bezeichnet wird, beim Expandieren des Auskleidungsschlauchs im Bereich der plastischen Dehnung des Fasermaterials weiter gesteigert werden kann, ohne dass eine weitere Dehnung des Fasermaterials in einem betreffenden Abschnitt der Lage aus Faserband erfolgt, die aus den erfindungsgemäßen Faserbändern durch ein überlappendes Wickeln derselben im Auskleidungsschlauch geformt wird. Dies führt wiederum dazu, dass sich beim Expandieren des Auskleidungsschlauchs im Kanal auch die bisher noch ungedehnten Abschnitte der Lage aus Fasermaterial so lange plastisch verformen, d.h. in Umfangsrichtung dehnen und dadurch ihre Wandstärke verringern, bis auch diese Abschnitte ihre endgültige Verformung erreicht haben und die Lage aus Fasermaterial in Umfangsrichtung insgesamt auf einen gewünschten Durchmesser aufgedehnt ist.

Anders ausgedrückt wird bei den erfindungsgemäßen Auskleidungsschläuchen nicht wie bisher das Material bei Erreichen der plastischen Verformung bei nahezu gleichbleibendem Innendruck des Auskleidungsschlauchs solange weitergedehnt bzw. fließt, bis es (bei leicht weiter steigendem Druck) reißt, sondern nach dem Erreichen einer definierten plastischen Verformung (plastische Dehnung), die durch die Dehnungsbegrenzungsmittel vorgegeben werden, muss der Kraftaufwand bzw. die Spannung im Fasermaterial in Umfangsrichtung stark zunehmen, um eine weitere Dehnung zu erreichen. Diese weitere Dehnung muss durch eine weitere deutliche Steigerung des Kalibrierdruckes erfolgen, was wiederum zur Folge hat, dass zunächst bisher ungedehnte Bereiche des Fasermaterials solange plastisch in Umfangsrichtung aufgedehnt werden, bis auch diese ihre definierte, durch die Dehnungsbegrenzungsmittel bestimmte Verformung erreicht haben. Durch diese gleichmäßige Dehnung wird die Verringerung/Ausdünnung der Materialstärke der Lage aus Fasermaterial in den betreffenden Abschnitten des Auskleidungsschlauchs begrenzt, so dass insgesamt ein Auskleidungsschlauch mit einer homogeneren Wandstärke ermöglicht wird.

Die Dehnungsbegrenzungsmittel können nach einer ersten Ausführungsform z.B. als geschlaufte oder wellenlinienförmige oder zickzack förmig in Umfangsrichtung liegende Fäden ausgeführt sein, die auf das Fasermaterial der Faserbänder in Längsrichtung derselben aufgelegt oder in dieses eingearbeitet sind, und auf diesen fixiert werden. Die Fäden sind Fäden aus einem textilen Nahtmaterial, die beispielsweise zum Vernähen des Glasfasermaterials eingesetzt werden, und die gegenüber dem Fasermaterial als solchem ein deutlich höheres Elastizitätsmodul besitzen, beispielsweise ein 2 bis 5 -fach größeres Elastizitätsmodul.

Die Dehnungsbegrenzungsmittel können als Wellenline oder zick-zack förmig oder in Form von Schlaufen verlegte Fäden sein, die in Umfangsrichtung des Auskleidungsschlauchs, d.h. in Längsrichtung der Faserbänder liegen, bzw. verlaufen, und die lokal nur eine vorgegebene Dehnung zulassen.

Bei Faserbändern, die aus einem Gelege oder einem Glasfaserkomplex bestehen, bei dem auf eine Matte aus verfestigten Wirrfasern in Längsrichtung der Faserbänder betrachtet parallel zueinander verlaufende Längsfasern, insbesondere Glasfaserrovings aufgelegt, und diese beispielsweise nach dem Aufstreuen von weiteren Wirrfasern durch Einbringen einer Vielzahl von parallel zueinander verlaufenden Zick-Zack-Nähten zu einem festen und hoch dehnbaren Glasfaserkomplex vernäht werden, kann es hierbei nach einer weiteren Ausführungsform, für die kein Schutz beansprucht wird, vorgesehen sein, dass die Fäden nach dem Vernähen der Lagen lose als Wellenlinie oder sonstige mäander- oder sägezahnförmige Linie auf den vernähten Glasfaserkomplex aufgelegt und durch zusätzliche Stiche mit diesem in vorgegebenen gleichmäßigen Abständen vernäht, oder in sonstiger Weise fixiert ist, z.B. durch Klebe- oder Schweißpunkte.

Alternativ kann es nach einer weiteren Ausführungsform, für die ebenfalls kein Schutz beansprucht wird, vorgesehen sein, dass die Dehnungsbegrenzungsmittel als linear in Längsrichtung der Faserbänder verlaufende Kunststofffäden, beispielsweise Polyamid- oder Polyesterfäden ausgeführt sind, die auf die Wirrfasermatte aufgelegt werden, bevor diese mit den darüber angeordneten Glas-Kurzfasern und sonstigen Faserlagen vernäht wird. Durch das Vernähen der Wirrfasermatte mit den darauf angeordneten Lagen aus Fasermaterial werden die linear eingelegten Kunststofffäden reibschlüssig zwischen den so gebildeten Lagen geklemmt und dadurch mit diesen mechanisch verbunden. Das Kunststoffmaterial der linear verlaufenden Kunststofffäden ist hierbei bevorzugt soweit gereckt, dass die Fäden ihre volle Zugfestigkeit bereitstellen, wenn die Dehnung des Fasermaterials den Bereich des gewünschten Dehnung-Grenzwertes erreicht, sodass die Kunststofffäden aufgrund ihrer Zugfestigkeit eine Weiterdehnung des Fasermaterials verhindern.

Nach einem weiteren der Erfindung zugrunde liegenden Gedanken sind die Fäden Glasfaserrovings, die bei einer vorgegebenen Zugspannung selbst eine deutlich geringere Dehnung als das Material der Faserbänder besitzen.

Diese sind wellenlinienförmig entlang der Längsachse der Faserbänder orientiert und mit dem Glasfasermaterial der Faserbänder an den Nulldurchgängen oder im Bereich der Maxima oder Minima der Wellenlinien vernäht, d.h. an den Schnittpunkten, an denen die Glasfaserrovings eine gedachte Längsachse auf dem Faserband kreuzen. Hierbei können durch die Auslenkung der z.B. sinusförmigen Wellenlinien gegenüber einer gedachten Längsachse eines Faserbandes in vorteilhafter Weise die Dehnungsbereiche vorgegeben werden, über die sich das Material der Glasfaserbänder bei der Beaufschlagung mit einer Zugspannung plastisch reversibel deformieren kann, bis der Dehnungs-Grenzwert erreicht ist und die Glasfaserrovings in dem jeweiligen Abschnitt des Fasermaterials vollständig gestreckt sind. In dieser linearen Anordnung verhindern die mit dem Fasermaterial der Faserbänder punktuell vernähten Rovings dann aufgrund ihrer in Längsrichtung betrachtet gegenüber dem Fasermaterial als solchem deutlich geringeren Dehnbarkeit eine weitere Dehnung des betreffenden Abschnitts des Faserbandes insgesamt. Dadurch wirken die wellenlinienartig auf den Faserbändern angeordneten Glasfaserrovings oder Fäden aus textilem Nahtmaterial als Dehnungsbegrenzungsmittel, welche eine weitere plastische Dehnung des Faserbandes in Längsrichtung beim Überschreiten eines bestimmten Dehnungs-Grenzwertes aktiv begrenzen, obwohl der betreffende Abschnitt ohne die zusätzlichen Glasfaserrovings oder auch Fäden aus textilem Nahtmaterial noch weiter plastisch bis zum Bruch des Materials gedehnt werden könnte.

Die wellenlinienförmig oder zickzack-förmig auf das Fasermaterial der Faserbänder aufgebrachten Fäden aus textilem Nahtmaterial oder Glasfaserrovings verlaufen bevorzugt zwischen den Einstichstellen der Längsnähte, mittels welcher die verschiedenen Lagen des Fasermaterials (Glasfaserkomplexes) der Faserbänder vernäht sind, sodass sich die Fäden bei einer Dehnung der Faserbänder in lateraler Richtung im Wesentlichen frei innerhalb des Materials bewegen können ohne durch das Nahtmaterial im Bereich der Einstichstellen daran gehindert zu werden.

Weiterhin kann es vorgesehen sein, dass die Dehnungsbegrenzungsmittel einen oder mehrere in Längsrichtung des Fasermaterials verlaufende Glasfaserrovings oder Fäden aus einem textilen Nahtmaterial umfassen, die unter Bildung von Schlaufen aus losem Nahtmaterial über in regelmäßigen Abständen entlang der Längsrichtung der Faserbänder angeordnete, paarweise dicht beieinander liegende Einstichstellen mit deren Fasermaterial vernäht sind. Bei dieser Ausführungsform wird die zusätzliche Dehnung der Faserbänder im plastischen Bereich bis zum Dehnung-Grenzwert dadurch bewirkt, dass das Nahtmaterial in den schlaufenförmigen Abschnitten zwischen zwei paarweisen Einstichstellen eine größere Länge aufweist als das ungedehnte Fasermaterial. So kann der Abstand zwischen zwei paarweisen Einstichstellen beispielsweise 20 mm betragen, wohingegen das Nahtmaterial in diesem Abschnitt eine Länge von 30 mm besitzt, sodass bei einer Dehnung des Faserbandes um etwas mehr als 10 mm der Dehnung-Grenzwert erreicht wird, bei welchem das dann linear gestreckt zwischen den beiden paarweisen Einstichstellen verlaufende Nahtmaterial eine weitere Dehnung verhindert.

Die Erfindung wird nachfolgend mit Bezug auf die Zeichnungen anhand von bevorzugten Ausführungsformen beschrieben.

In den Zeichnungen zeigen:
- Fig. 1a: eine schematische Querschnittsansicht eines Kanals mit einem eingezogenen und teilweise expandierten Auskleidungsschlauch des Standes der Technik, bei welchem die Lage aus Fasermaterial zur Verdeutlichung der unterschiedlichen Wanddicken exemplarisch übertrieben dargestellt ist,
- Fig. 1b: eine schematische Querschnittsansicht des Kanals von Fig. 1a mit einem eingezogenen und teilweise expandierten erfindungsgemäßen Auskleidungsschlauch,
- Fig. 2: eine schematische Darstellung eines exemplarischen Spannungs-Dehnungs-Diagramms eines erfindungsgemäßen Faserbandes, bei dem die weitere plastische Dehnung bei Erreichen eines vorgegebenen Dehnung-Grenzwertes durch Dehnungsbegrenzungsmittel aktiv begrenzt wird, sowie des Fasermaterials ohne Dehnungsbegrenzungsmittel (strichpunktierte Linie),
- Fig. 3: eine schematische Darstellung einer ersten Ausführungsform eines zu einer Faserbandlage des erfindungsgemäßen Auskleidungsschlauchs gewickelten Faserbandes, bei welchem die Dehnungsbegrenzungsmittel durch mehrere wellenlinienförmig auf dem Faserband angeordnete Fäden geformt werden,
- Fig. 4: eine schematische Darstellung einer weitere Ausführungsform eines erfindungsgemäßen Faserbandes, bei welchem die Dehnungsbegrenzungsmittel einen in Längsrichtung verlaufenden Faden umfassen, der über in regelmäßigen Abständen zueinander angeordneten paarweisen Einstichstellen unter Bildung von Schlaufen mit dem Fasermaterial des Faserbandes vernäht ist.

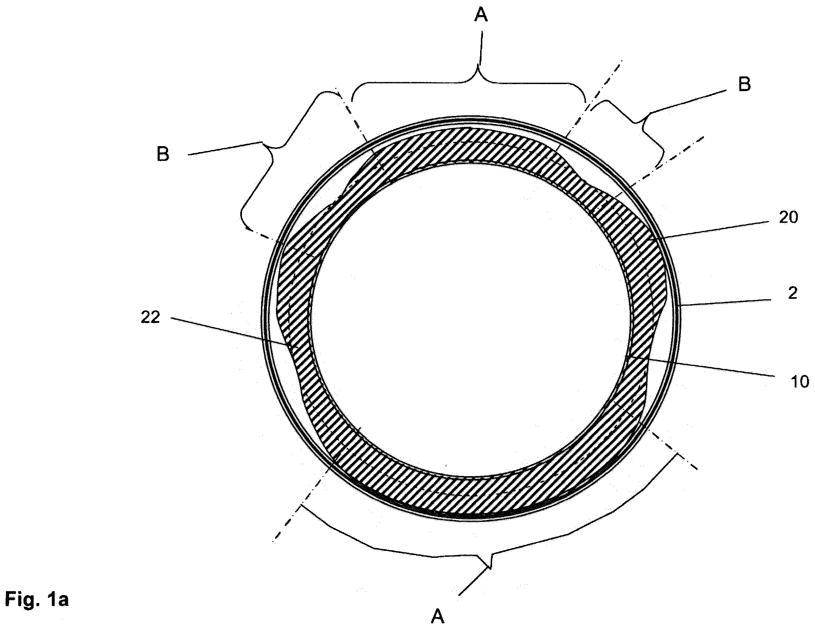

Wie in der Darstellung von Fig. 1a gezeigt ist, umfasst ein Auskleidungsschlauch 1 zur Sanierung eines defekten Kanalrohres 2 einen Innenfolienschlauch 10 sowie eine um diesen herum angeordnete, radial aufweitbare Lage 22 aus wenigstens einem schraubenförmig überlappend gewickelten Faserband 20, welches in bekannter Weise mit einem insbesondere durch UV-Licht härtbaren Reaktionsharz getränkt ist.

Aufgrund der internen Reibung des Fasermaterials der durch schraubeförmiges Wickeln erzeugten Lage 22 aus Fasermaterial kommt es bei einem Expandieren des Auskleidungsschlauchs 1 im Kanal 2 zu unterschiedlichen plastischen Dehnungen desselben in Umfangsrichtung, die dazu führen, dass die Lage 22 aus Fasermaterial in Bereichen A, wie z.B. im Bereich der Sohle des Kanals 2 eine größere Dicke aufweist, als in benachbarten Bereichen B, in denen das Fasermaterial deutlich stärker plastisch gedehnt ist.

Die Bereiche A und B sind bei dem in Fig. 1a gezeigten herkömmlichen Auskleidungsschlauch zur besseren Veranschaulichung der Problematik übertrieben dargestellt.

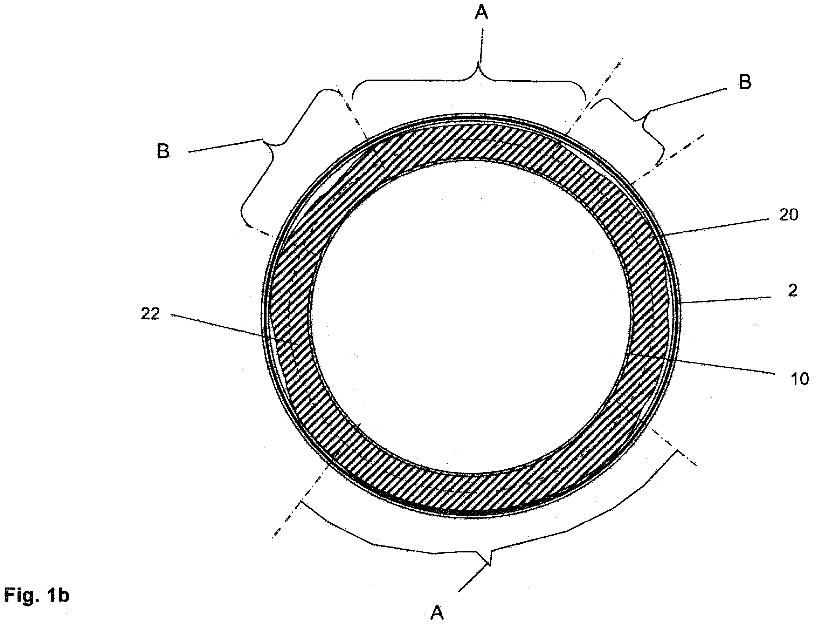

Bei dem in Fig. 1b dargestellten Auskleidungsschlauch 1, der unter Einsatz der erfindungsgemäßen Faserbänder 22 durch schraubenförmiges Wickeln derselben auf den Innenfolienschlauch 10 erzeugt wurde, sind die Bereiche A und B zwar ebenfalls noch erkennbar; allerdings fallen die Unterschiede in den Wandstärken aufgrund der erfindungsgemäß in vorteilhafter Weise veränderten Dehnungseigenschaften des Fasermaterials, welche durch die Dehnungsbegrenzungsmittel 100 erhalten werden, erheblich geringer aus, sodass ein Auskleidungsschlauch 1 erhalten wird, der nach dem Expandieren im Kanal 2 eine nahezu homogene Wandstärke besitzt. Hierdurch ist es möglich, dass die bei herkömmlichen Auskleidungsschläuchen bisher erforderliche zusätzliche Menge an Fasermaterial entfallen kann, die stets benötigt wird, um in sämtlichen Bereichen B die für die Festigkeit des Auskleidungsschlauchs 1 geforderte Mindestwandstärke sicherzustellen.

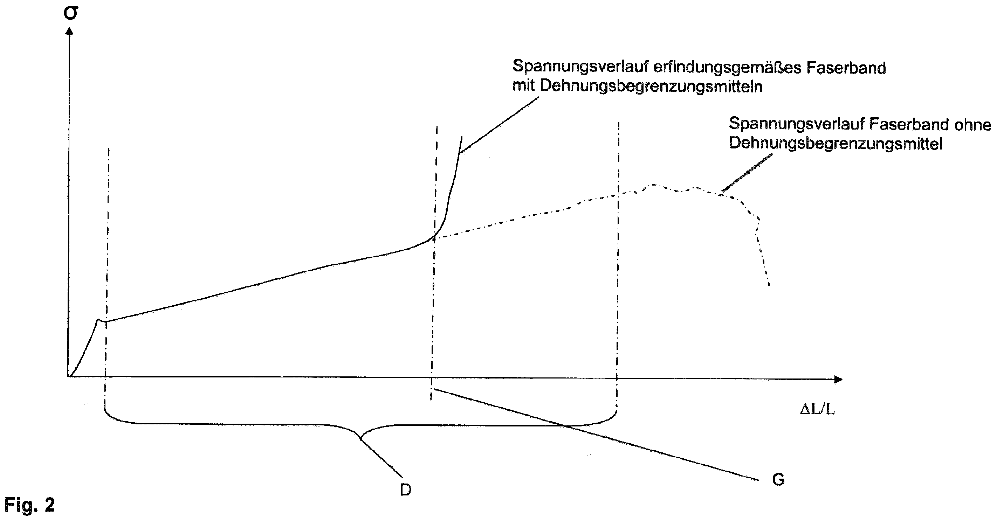

Fig. 2 zeigt ein Spannung-Dehnungsdiagramm für ein beispielhaft in den erfindungsgemäßen Auskleidungsschläuchen eingesetztes Faserband 22, welches durch die Dehnungsbegrenzungsmittel 100 bei einer üblichen Dehnung im plastischen Bereich D, d. h. in dem Bereich, in dem das Fasermaterial bei einer Erhöhung der Zugspannung σ oder Zugkraft plastisch verformt wird. Hierbei zeigt die strichpunktierte Line das Dehnungsverhalten des Fasermaterials ohne Dehnungsbegrenzungsmittel 100 im plastischen Bereich D. Wie aus dem Diagramm erkennbar ist, ist das herkömmliche Fasermaterial nach dem Erreichen des mit G bezeichneten Dehnung-Grenzwertes ohne die eingearbeiteten Dehnungsbegrenzungsmittel bei einer Erhöhung der Zugkraft weiter plastisch deformierbar, bis das Material seine maximale Dehnung ΔL/L erreicht, wohingegen die in das Material eingearbeiteten Dehnungsbegrenzungsmittel 100 die Zugfestigkeit des Materials beim Erreichen des Dehnung-Grenzwertes G übermäßig stark ansteigen lassen, sodass sich das Material bei einer Erhöhung der Zugspannung nicht oder nur geringfügig weiter ausdehnt.

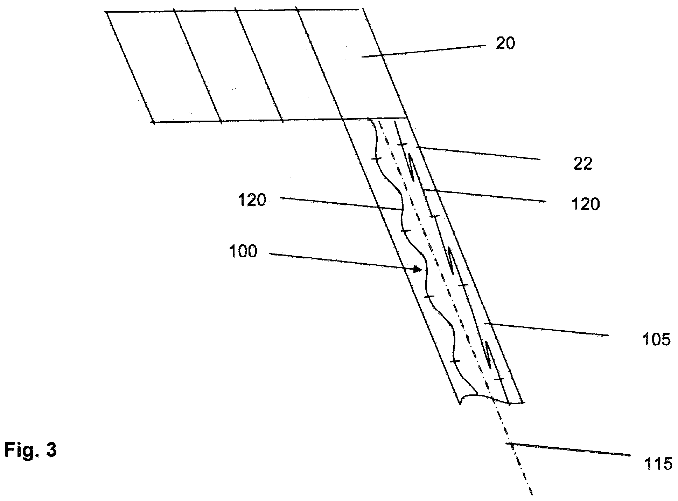

Fig. 3 zeigt eine schematische Darstellung einer ersten Ausführungsform eines zu einer Faserbandlage 20 des erfindungsgemäßen Auskleidungsschlauchs 1 gewickelten Faserbandes 22, bei welchem die Dehnungsbegrenzungsmittel 100 durch mehrere wellenlinienförmig auf dem Faserband angeordnete Fäden 120 geformt werden, die entlang einer gedachten Linie 115 in Längsrichtung auf dem Faserband 22 ausgerichtet sind. Wie der Darstellung der Fig. 3 entnehmbar ist, sind dort exemplarisch auf der linken Seite ein wellenlinienförmig verlaufender Faden 120, und auf der rechten Seite daneben liegend ein mit Schlaufen versehener Faden 120 dargestellt, die an nicht näher bezeichneten Ankerpunkten mit dem Basismaterial 105 des Faserbandes 22 verbunden sind. Die Darstellung ist rein exemplarisch und soll lediglich das Grundprinzip der beiden Ausführungsformen verdeutlichen. Bevorzugt werden auf jedem Faserband dieselben Fadenverläufe eingesetzt, wobei mehrere Fäden 120 gleichzeitig in einem Abstand von beispielsweise 2 bis 10 mm oder mehr bevorzugt parallel zueinander oder relativ zueinander verschoben auf dem Basismaterial 105 verlaufen, so dass ein Wellenberg eines ersten Fadens 120 in einem Wellental eines benachbarten zweiten Fadens 120 liegt.

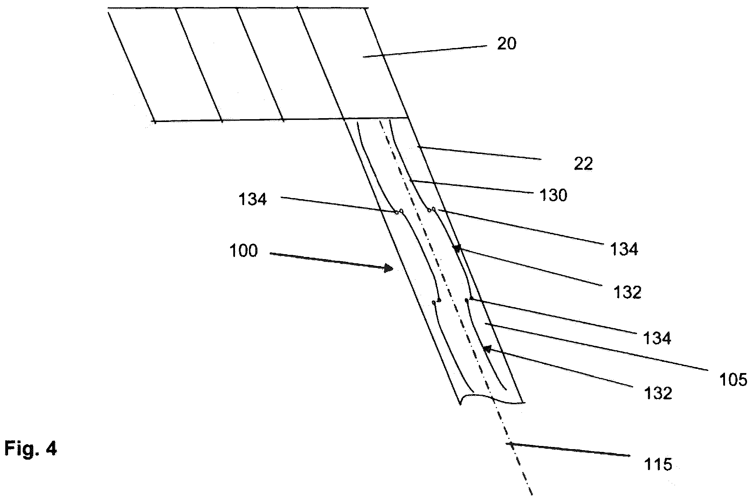

Fig. 4 zeigt eine schematische Darstellung einer weiteren Ausführungsform eines erfindungsgemäßen Faserbandes 22, bei welcher die Dehnungsbegrenzungsmittel 100 einen in Längsrichtung 115 verlaufenden Faden 130, insbesondere einen nicht erfindungsgemäßen gereckten Kunststofffaden oder einen Faden aus einem zugfesten textilen Werkstoff wie Garn umfassen, der zwischen in regelmäßigen Abständen zueinander angeordneten paarweisen Einstichstellen 134 unter Bildung von Schlaufen 132 mit dem Basismaterial 105 des Faserbandes 22 vernäht ist.

### Bezugszeichenliste

- 1: Auskleidungsschlauch
- 2: Kanalrohr
- 10: Innenfolienschlauch
- 20: Faserband
- 22: Lage aus Fasermaterial
- 100: Dehnungsbegrenzungsmittel
- 105: Basismaterial der Faserbänder
- 115: gedachte Linie in Längsrichtung eines Faserbandes
- 120: Fäden oder Glasfaserrovings
- 130: Fäden, die unter Bildung von Schlaufen vernäht sind
- 132: Schlaufen
- 134: Einstichstellen

- D: Bereich für plastische Dehnung
- A: Bereiche mit großer Wandstärke und geringer plastischer Verformung
- B: Bereiche mit geringer Wandstärke und hoher plastischer Verformung
- G: Dehnungsgrenzwert
- σ: Spannung
- ΔL/L: Dehnung

## Patentansprüche

1. Faserband (22) zur Herstellung eines Auskleidungsschlauchs (1) zur Sanierung von defekten Rohrleitungen und Kanälen, welches in Längsrichtung durch eine darauf wirkende Zugspannung in einem Dehnungsbereich (D) plastisch dehnbar ist, wobei
das Faserband (22) ein Basismaterial (105) und Dehnungsbegrenzungsmittel (100) umfasst, die eine weitere plastische Dehnung des Faserbandes (22) im Dehnungsbereich (D) in Längsrichtung beim Überschreiten eines durch die Dehnungsbegrenzungsmittel (100) bestimmten Dehnungs-Grenzwertes (G) aktiv begrenzen, wobei die Dehnungsbegrenzungsmittel (100) einen oder mehrere in Längsrichtung des Fasermaterials verlaufende Glasfaserrovings oder Fäden (130) aus einem textilen Nahtmaterial umfassen, die unter Bildung von Schlaufen (132) aus losem Nahtmaterial über in regelmäßigen Abständen entlang der Längsrichtung des Faserbandes (22) angeordnete, paarweise dicht beieinander liegende Einstichstellen (134) mit dem Basismaterial (105) vernäht sind, oder wobei die Dehnungsbegrenzungsmittel wellenlinenförmig und/oder zick-zack förmig in Längsrichtung des Faserbandes (22) verlaufende, mit dem Basismaterial (105) des Faserbandes (22) an Ankerpunkten punktuell vernähte, parallel nebeneinander verlaufende Glasfaserrovings oder Fäden (120) aus einem textilen Nahtmaterial umfassen, die lokal ausschließlich an den Schnittpunkten mit einer jeweiligen in Längsrichtung des Faserbandes (22) verlaufenden gedachten Linie (115) mit dem Basismaterial (105) des Faserbandes (22) verbunden sind.

2. Auskleidungsschlauch (1) zur Sanierung eines defekten Kanalrohres (100) umfassend einen Innenfolienschlauch (10) sowie eine um diesen herum angeordnete, radial aufweitbare Lage (20) aus wenigstens einem überlappend schraubenförmig gewickelten Faserband (22) nach Anspruch 1.

3. Auskleidungsschlauch nach Anspruch 2,
**dadurch gekennzeichnet,**
**dass** das Faserband (22) ein Basismaterial (105) aus einem mehrere miteinander vernähte Lagen umfassenden Gelege oder Glasfaserkomplex umfasst, und dass die Glasfaserrovings oder Fäden aus einem textilen Nahtmaterial (120, 130) nach dem Vernähen der Lagen lose auf das vernähte Gelege oder auf den vernähten Glasfaserkomplex aufgelegt und durch zusätzliche Stiche mit diesem in vorgegebenen gleichmäßigen Abständen vernäht sind.

4. Auskleidungsschlauch nach Anspruch 3,
**dadurch gekennzeichnet,**
**dass** die wellenlinienförmig oder zickzack-förmig auf das Fasermaterial des Faserbandes (22) aufgebrachten Glasfaserrovings oder Fäden aus einem textilen Nahtmaterial (120) bevorzugt zwischen den Einstichstellen von Längsnähten verlaufen, mittels welcher die verschiedenen Lagen des Fasermaterials des Faserbandes (22) vernäht sind, sodass sich die Fäden (120) bei einer Dehnung des Faserbandes (22) in lateraler Richtung im Wesentlichen frei innerhalb des Materials bewegen können ohne durch das Nahtmaterial im Bereich der Einstichstellen daran gehindert zu werden.

## Claims

1. Fibre strip (22) for producing a lining tube (1) for restoring defective pipelines and sewers, the fibre strip being plastically stretchable in the longitudinal direction in a stretching region (D) by a tensile stress acting on said strip, wherein the fibre strip (22) comprises a base material (105) and a stretch-limiting means (100), which actively limit a further plastic stretching of the fibre strip (22) in the stretching region (D) in the longitudinal direction when a stretch limit value (G) determined by the stretch-limiting means (100) is exceeded, wherein the stretch-limiting means (100) comprise one or more glass fibre rovings or threads (130) of a textile sewing material which extend in the longitudinal direction of the fibre material and are sewn to the base material (105) so as to form loops (132) of loose sewing material via penetration points (134) which are arranged at regular intervals along the longitudinal direction of the fibre strip (22) and lie close to one another in pairs, or
wherein the stretch-limiting means comprise glass fibre rovings or threads (120) made of a textile sewing material which run next to one another in parallel in a wavy shape and/or zigzag shape in the longitudinal direction of the fibre strip (22), are sewed to the base material (105) of the fibre strip (22) at certain anchoring points, and are connected to the base material (105) of the fibre strip (22) locally exclusively at the intersection points with a respective imaginary line (115) running in the longitudinal direction of the fibre strip (22).

2. Lining tube (1) for restoring a defective sewer pipe (100), comprising an inner foil tube (10) and a radially expandable layer (20) arranged around the inner foil tube and made of at least one overlappingly and helically wound fibre strip (22) according to Claim 1.

3. Lining tube according to Claim 2,
**characterized**
**in that** the fibre strip (22) comprises a base material (105) consisting of a laid fabric or glass fibre complex comprising multiple layers sewn to one another, and in that, after the layers have been sewed together, the glass fibre rovings or threads made of a textile sewing material (120, 130) are laid loosely on the sewn-together laid fabric or on the sewn-together glass fibre complex and are sewn thereto at predetermined regular intervals by additional stitches.

4. Lining tube according to Claim 3,
**characterized**
**in that** the glass fibre rovings or threads made of a textile sewing material (120) that were applied in a wavy shape or zigzag shape to the fibrous material of the fibre strip (22) preferably run between the penetration points of longitudinal seams, by means of which the various layers of the fibrous material of the fibre strip (22) are sewn together, with the result that, when the fibre strip (22) is being stretched in the lateral direction, the threads (120) can move substantially freely within the material without being prevented from doing so by the sewing material in the region of the penetration points.

## Revendications

1. Bande fibreuse (22) pour la fabrication d'un tuyau flexible de revêtement (1) destiné à la rénovation de canalisations et de conduites défectueuses, qui est plastiquement extensible dans la direction longitudinale sous l'effet d'une contrainte de traction tension agissant sur elle dans une zone d'extension (D),
la bande fibreuse (22) comprenant un matériau de base (105) et des moyens de limitation d'extension (100) qui limitent activement une extension plastique supplémentaire de la bande fibreuse (22) dans la zone d'extension (D) dans la direction longitudinale lors du dépassement d'une valeur limite d'extension (G) définie par les moyens de limitation d'extension (100), les moyens de limitation d'extension (100) comprenant un ou plusieurs rovings de fibres de verre ou fils (130) en un matériau textile à coudre s'étendant dans la direction longitudinale du matériau fibreux, qui sont cousus au matériau de base (105) en formant des boucles (132) de matériau à coudre lâche à travers des points de piqûre (134) agencés à intervalles réguliers le long de la direction longitudinale de la bande fibreuse (22), rapprochés les uns des autres par paires, ou
les moyens de limitation de l'extension comprenant des rovings de fibres de verre ou des fils (120) en un matériau textile à coudre s'étendant parallèlement les uns aux autres, cousus ponctuellement à des points d'ancrage avec le matériau de base (105) de la bande fibreuse (22), s'étendant en forme d'ondulation et/ou en zigzag dans la direction longitudinale de la bande fibreuse (22), qui sont reliés localement au matériau de base (105) de la bande fibreuse (22) exclusivement aux points d'intersection avec une ligne imaginaire (115) s'étendant dans la direction longitudinale de la bande fibreuse (22).

2. Tuyau flexible de revêtement (1) pour la rénovation d'un tube de canalisation défectueux (100), comprenant un tuyau intérieur en film (10) ainsi qu'une couche radialement expansible (20) agencée autour de celui-ci, composée d'au moins une bande fibreuse (22) enroulée de manière hélicoïdale avec chevauchement, selon la revendication 1.

3. Tuyau flexible de revêtement selon la revendication 2,
**caractérisé**
**en ce que** la bande fibreuse (22) comprend un matériau de base (105) composé d'une nappe ou d'un complexe de fibres de verre comprenant plusieurs couches cousues ensemble, et **en ce que** les rovings de fibres de verre ou fils en un matériau de couture textile (120, 130) sont posés de manière lâche sur la nappe cousue ou sur le complexe de fibres de verre cousu après la couture des couches et sont cousus à celui-ci à des intervalles réguliers prédéfinis par des points supplémentaires.

4. Tuyau flexible de revêtement selon la revendication 3,
**caractérisé**
**en ce que** les rovings de fibres de verre ou les fils en un matériau textile à coudre (120) appliqués en forme d'ondulations ou en zigzag sur le matériau fibreux de la bande fibreuse (22) s'étendent de préférence entre les points de piqûre de coutures longitudinales, au moyen desquelles les différentes couches du matériau fibreux de la bande fibreuse (22) sont cousues, de telle sorte que les fils (120) peuvent se déplacer essentiellement librement à l'intérieur du matériau dans la direction latérale lors d'une extension de la bande fibreuse (22), sans être entravés par le matériau de couture dans la zone des points de piqûre.
